# EUROPEAN PATENT APPLICATION

(11) **EP 2 560 295 A1**
(43) Date of publication of application: **20.02.2013**
(21) Application number: 12176374.2
(22) Date of filing: 13.07.2012
(51) Int. Cl.: H04B 5/00

(54) **Using a mobile device as a hearing aid**

(30) Priority: 15.08.2011 US 201161523839 P
(71) Applicant: Sony Mobile Communications AB, 221 88 Lund (SE)
(72) Inventor: Klinghult, Gunnar, 221 88 Lund (SE)
(74) Representative: HOFFMANN EITLE

(57) **Abstract**

The invention is directed to systems, methods and computer program products for receiving and processing a plurality of electromagnetic signals at a mobile device. The plurality of electromagnetic signals includes electromagnetic signals broadcast from a broadcast multi-loop coil that encircles a space in which a mobile device is located. In one embodiment of the invention, a mobile device includes a processor, an interface in operable communication with the processor, a first multi-loop coil that captures an electromagnetic signal broadcast from the broadcast multi-loop coil, and an operational amplifier that receives the electromagnetic signal from the first multi-loop coil and converts the electromagnetic signal into at least one of an audio signal and a radio frequency (RF) signal that is audibly communicated to the user through the interface.

## Description

### Cross Reference to Related Applications

The present application claims the benefit of the filing date of U.S. provisional patent application Ser. No. 61/523,839, filed on August 15, 2011, the disclosure of which is incorporated herein by reference.

### BACKGROUND

A standard hearing aid captures an audio signal, including background noise, with its microphone and subsequently amplifies this audio signal. While a standard hearing aid works well in a quiet environment, it may not be as effective in a larger and/or noisier environment because the hearing aid does not distinguish between the audio signal to be captured (e.g., the audio signal associated with a speaker) and the background noise. A hearing aid with a telecoil (or a multi-loop coil) installed in the hearing aid captures an electromagnetic signal rather than an audio signal. The hearing aid subsequently converts this electromagnetic signal to an audio signal. As used herein, a telecoil is a multi-coil loop of wire that functions as an induction loop. The wire is manufactured with a conductive element.

### BRIEF SUMMARY

The invention is directed to systems, methods and computer program products for receiving and processing a plurality of electromagnetic signals at a mobile device. The plurality of electromagnetic signals includes electromagnetic signals broadcast from a broadcast multi-loop coil that encircles a space in which a mobile device is located. The plurality of electromagnetic signals also includes radiocommunication signals broadcast from cellular base stations. In some embodiments of the invention, a mobile device includes a processor configured to process the plurality of electromagnetic signals and an interface in operable communication with the processor, where the interface is configured to communicate to the mobile device or to a user of the mobile device information pertaining to at least one of the plurality of electromagnetic signals. Additionally, the mobile device includes a first multi-loop coil that captures an electromagnetic signal broadcast from the broadcast multi-loop coil, and an operational amplifier that receives the electromagnetic signal from the first multi-loop coil and converts the electromagnetic signal into at least one of an audio signal and a radio frequency (RF) signal that is audibly communicated to the user through the interface. In some embodiments, the interface may be a speaker associated with the mobile device or a wireless earpiece as described in the embodiments below. In some embodiments, the RF signal is a short-range RF signal that is transmitted from the mobile device to a wireless earpiece. The invention permits a mobile device to be used as a hearing aid.

Additionally, the mobile device includes a rechargeable power source that supplies power to the mobile device, where the first multi-loop coil is connected to circuitry for charging the rechargeable power source. Additionally, the first multi-loop coil may also be used as a transmitting or receiving antenna for near-field communication (NFC). Additionally, the first multi-loop coil may also be used for both charging the rechargeable power source and for near-field communication (NFC). Additionally, the first multi-loop coil may be used simultaneously for capturing the electromagnetic signal from the broadcast multi-loop coil and for charging the rechargeable power source. Additionally, as indicated above, the electromagnetic signal received by the first multi-loop coil may be converted to a short-range radio frequency (RF) signal and the short-range RF signal may be transmitted wirelessly to a hands-free earpiece that converts the received short-range RF signal to an audio signal. The various methods described herein with respect to the mobile device may be implemented in a computer program product that includes a non-transitory computer readable medium which includes a set of codes designed for performing the various methods.

The invention described herein adds this functionality to a mobile device. The mobile device described herein may be used by a hearing-impaired person or may be used by a person with normal hearing who wishes to hear a speaker's words with better clarity in a noisy environment.

The features, functions, and advantages that have been discussed may be achieved independently in various embodiments of the present invention or may be combined with yet other embodiments, further details of which can be seen with reference to the following description and drawings.

### BRIEF DESCRIPTION OF THE DRAWINGS

Having thus described embodiments of the invention in general terms, reference will now be made to the accompanying drawings, where:
Figure 1 illustrates a multi-loop coil associated with a building and a multi-loop coil associated with a mobile device;
Figure 2 is a flowchart illustrating a general process flow for receiving and processing a plurality of electromagnetic signals at a mobile device; and
Figure 3 illustrates a mobile device that includes a multi-loop coil.

### DETAILED DESCRIPTION OF EMBODIMENTS OF THE INVENTION

Embodiments of the present invention now may be described more fully hereinafter with reference to the accompanying drawings, in which some, but not all, embodiments of the invention are shown. Indeed, the invention may be embodied in many different forms and should not be construed as limited to the embodiments set forth herein; rather, these embodiments are provided so that this disclosure may satisfy applicable legal requirements. Like numbers refer to like elements throughout.

Embodiments of the invention are directed to systems, methods and computer program products for receiving and processing a plurality of electromagnetic signals at a mobile device. The plurality of electromagnetic signals includes electromagnetic signals broadcast from a broadcast multi-loop coil that encircles a space near where a mobile device is located. The plurality of electromagnetic signals also includes radiocommunication signals broadcast from cellular base stations. In some embodiments of the invention, a mobile device includes a processor configured to process the plurality of electromagnetic signals and an interface in operable communication with the processor, where the interface is configured to communicate to a user of the mobile device information pertaining to at least one of the plurality of electromagnetic signals. Additionally, the mobile device includes a first multi-loop coil that captures an electromagnetic signal broadcast from the broadcast multi-loop coil, and an operational amplifier that receives the electromagnetic signal from the first multi-loop coil and converts the electromagnetic signal into at least one of an audio signal and a radio frequency (RF) signal that is audibly communicated to the user through the interface. Additionally, the mobile device includes a rechargeable power source that supplies power to the mobile device, where the first multi-loop coil is connected to circuitry for charging the rechargeable power source. The invention permits a mobile device to be used as a hearing aid.

The invention is useful because the mobile device may be used as a hearing aid, thus eliminating the need for a traditional hearing aid device. As explained below, the same multi-loop coil that is used to charge a rechargeable power source located in the mobile device may be used as an antenna to receive an electromagnetic signal from the broadcast multi-loop coil. By reusing the multi-loop coil that is used to charge the rechargeable power source, the cost and space consumption for implementing a telecoil system using a mobile device is reduced.

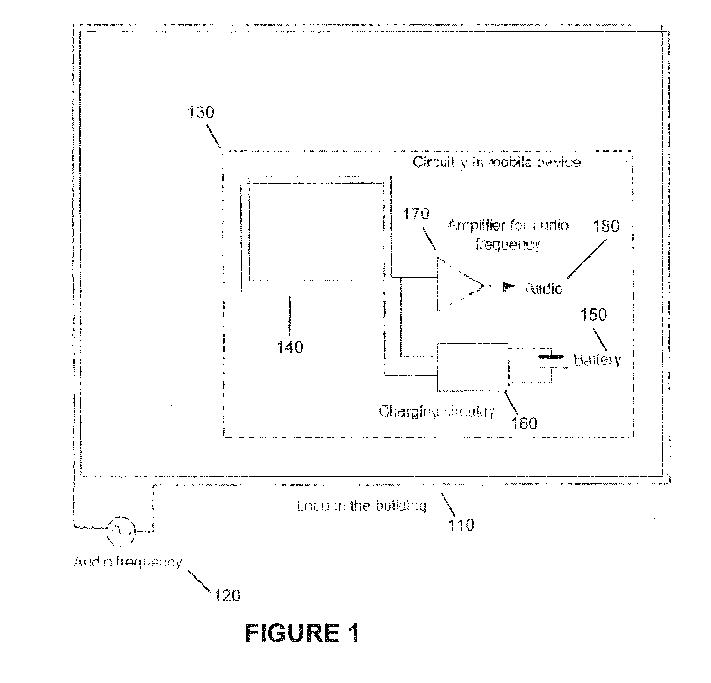

Referring now to Figure 1, Figure 1 illustrates a broadcast multi-loop coil 110 that encircles a space. As used herein, a broadcast multi-loop coil may also be referred to as a transmitting multi-loop coil. In some embodiments, this space may be an entire building. The broadcast multi-loop coil **110** may encircle the building under the ground level, along the ground level of the building, or above the ground level of the building (e.g., along the edges of the roof of the building). In some embodiments, the broadcast multi-loop coil **110** may be installed into the walls of the building. In some embodiments, a separate broadcast multi-loop coil **110** may run along a ceiling (or floor) of each room in the building. In some embodiments, the broadcast multi-loop coil **110** may not necessarily encircle the building; instead, the broadcast multi-loop coil **110** may be located adjacent to the building. The broadcast multi-loop coil **110** transmits electromagnetic signals away from the broadcast multi-loop coil **110.** These electromagnetic signals are transmitted at frequencies that may be captured by the receiving multi-loop coil **140** located in a mobile device **130.**

Figure 1 also presents an audio system **120.** The audio system may include one or more operational amplifiers that convert audio signals to electromagnetic signals. The audio signals are received from an audio source (e.g., a lecture speaker in a lecture hall). Once converted, the electromagnetic signals are broadcasted from or transmitted away from the broadcast multi-loop coil **110.** In some embodiments, the electromagnetic signals are transmitted from the broadcast multi-loop coil **110** in addition to the transmission of audio signals from an audio source.

The number of broadcast multi-loop coil installations has been steadily increasing over past few years in order to assist the hearing impaired and to enable people to hear higher quality audio signals in noisy environments. By enabling a mobile device to detect, identify, and process the electromagnetic signals broadcast by such broadcast multi-loop coils, people only need to carry their mobile devices to enable reception of a higher quality audio signal. Therefore, the invention will eliminate the need for conventional hearing aids in many situations.

Figure 1 also presents a receiving multi-loop coil **140.** The receiving multi-loop coil may also be referred as the first multi-loop coil. The receiving multi-loop coil **140** may be used for several functions associated with the mobile device. For example, the receiving multi-loop coil **140** may be used to charge, via the charging circuitry **160**, a rechargeable power source (e.g., battery **150)** that provides power to the mobile device **130.** The rechargeable power source may provide power to one or more components of the mobile device **130** (e.g., a camera, an active NFC chip, a global positioning system, etc.). In some embodiments, the rechargeable power source may be detachable from the mobile device **130,** while in other embodiments, the rechargeable power source may not be detachable from the mobile device **130.** In embodiments where the rechargeable power source is detachable from the mobile device **130,** the rechargeable power source may be recharged outside the mobile device **130** without using the receiving multi-loop coil **140.** One of the advantages of using charging coils to receive electromagnetic signals from a broadcast multi-loop coil **110** is that any mobile device that has such a coil (e.g., a receiving multi-loop coil **140)** can be adapted for the purpose of enabling a hearing aid. In alternate embodiments, a separate receiving multi-loop coil may be used specifically for the purpose of capturing electromagnetic signals broadcast by the broadcast multi-loop coil **110.** Additionally, in such alternate embodiments, separate multi-loop coils may be used for the purpose of charging a rechargeable power source in the mobile device and for the purpose of communicating with a near-field communication (NFC) terminal.

In the embodiment presented in Figure 1, the receiving multi-loop coil **140,** which is used to charge the rechargeable power source, may also be used to receive an electromagnetic signal broadcast by the broadcast multi-loop coil **110.** In most embodiments, the receiving multi-loop coil **140** functions as a passive component, i.e., it does not need to be powered by a power source that is located inside the mobile device in order to receive an electromagnetic signal from the broadcast multi-loop coil **110.** However, in alternate embodiments, the receiving multi-loop coil **140** may function as an active component, i.e., it needs to be powered by a power source (e.g., the battery **150** or some other power source located within the mobile device that is used for the purpose of powering the receiving multi-loop coil **140)** in order to receive an electromagnetic signal from the broadcast multi-loop coil **110.** As used herein, a passive multi-loop coil can accomplish its function without receiving power from a power source located in the mobile device. As used herein, an active multi-loop coil can accomplish its function if the active multi-loop coil receives power from a power source located in the mobile device.

One of the advantages of using the receiving multi-loop coil **140** of a mobile device over a multi-loop coil in a regular hearing aid is that the receiving multi-loop coil **140** of a mobile device, which is also used to charge a rechargeable power source in the mobile device, can be configured to have a bigger coil diameter and more coil turns compared to the coil diameter and number of coil turns of a conventional multi-loop coil of a regular hearing aid. Therefore, because of the bigger coil diameter and the greater number of coil turns, the signal-to-noise (SNR) ratio of an electromagnetic signal captured by the receiving multi-loop coil **140** is greater than the SNR ratio of an electromagnetic signal captured by a regular hearing aid.

The receiving multi-loop coil **140** that is used to charge the rechargeable power source receives electromagnetic signals (and/or transmits electromagnetic signals) at high frequencies (e.g., hundreds of kHz). In general, a telecoil system uses the audio frequency band without any modulation. The electromagnetic signal received or captured at the receiving multi-lop coil **140** is forwarded to the operational amplifier **170.** The operational amplifier converts the electromagnetic signal to an audio signal **180.** In some embodiments, the same operational amplifier **170** or a power amplifier may be implemented to amplify the audio signal. The receiving system (receiving multi-loop coil **140** and/or the operational amplifier **170)** is power efficient and uses less power compared to receiving system based on other principles.

The charging system (i.e., the charging circuitry **160** and/or the receiving multi-loop coil **140)** needs to be tuned so that the impedance (e:g., input impedance) at audio frequency as seen from the receiving multi-loop coil **140** is relatively high (e.g., greater than a threshold impedance). In some embodiments, the system may prompt a user of the system to define or set a value for this threshold impedance, while in other embodiments, the system may be configured to automatically determine a value for this threshold impedance. If this is not accomplished, charging the rechargeable power source in the mobile device may short-circuit the audio frequency-producing circuitry (e.g., the operational amplifier **170)** or the audio frequency signals produced by the operational amplifier **170.** In order to tune the charging system so that the input impedance at audio frequency as seen from the receiving multi-loop coil **140** is relatively high, an audio power amplifier, which may be used together with a headset, may be installed in the mobile device for this purpose. In some embodiments, the functionality of the audio power amplifier may be integrated into the operational amplifier **170.** Additionally or alternatively, in some embodiments, in order to tune the charging system so that the input impedance at audio frequency as seen from the receiving multi-loop coil **140** is relatively high, a pre-amplifier that is connected to the receiving multi-loop coil **140** may also be installed in the mobile device. In some embodiments, the pre-amplifier receives the electromagnetic signal from the receiving multi-loop coil **140** and prepares the electromagnetic signal for processing at the operational amplifier **170.** For example, the pre-amplifier may amplify the electromagnetic signal and/or reduce the amount of noise in the electromagnetic signal.

In some embodiments, the invention includes a hands-free earpiece (e.g., Bluetooth earpiece) or a hands-free headset. In such embodiments, the user can wear the hands-free earpiece. The hands-free earpiece receives short-range radio frequency (RF) signals from the mobile device and converts the short-range RF signals to audio signals that can be heard by the listener. By using a hands-free earpiece, a user does not need to continuously hold the mobile device near the user's ear. These short-range RF signals (between 2400 MHz and 2480 MHz) may be produced by the mobile device in one of two ways. In one embodiment, the audio signal produced by the operational amplifier **170** is converted to a short-range RF signal by the same or another operational amplifier and is then transmitted to the earpiece. In another embodiment, the electromagnetic signal received by the operational amplifier **170** from the receiving multi-loop coil **140** is directly converted to a short-range RF signal by the same operational amplifier **170** (or a different operational amplifier) and subsequently transmitted to the earpiece. Therefore, in the second embodiment, the electromagnetic signal received by the receiving multi-loop coil is never converted to an audio signal within the mobile device. The quality of the audio signal that is heard with a hands-free earpiece is greater than the quality of the audio signal that is heard with a traditional hearing aid with a multi-loop coil. This is because the quality of the electromagnetic signal captured by the receiving multi-loop coil **140** is greater than the quality of an electromagnetic signal captured by a multi-loop coil in a traditional hearing aid. The quality of the electromagnetic signal captured by the receiving multi-loop coil **140** is better because the receiving multi-loop coil 140 in the mobile device has a greater coil diameter and more coil turns when compared to a multi-loop coil in a conventional hearing aid, thus enabling capture of an electromagnetic signal with a higher signal-to-noise ratio when compared to an electromagnetic signal captured by a multi-loop coil in a regular hearing aid.

In some embodiments, the receiving multi-loop coil **140** is used for the purpose of transmitting the produced short-range RF signals to the hands-free earpiece, while in other embodiments, a separate multi-loop coil is used for the same purpose. In embodiments where the receiving multi-loop coil **140** is used for the purpose of transmitting the short-range RF signals to the hands-free earpiece, this function may be accomplished simultaneously with other functions of the receiving multi-loop coil **140** (e.g., communicating with (either receiving from or transmitting electromagnetic signals to) an NFC terminal, receiving an electromagnetic signal from the broadcast multi-loop coil, charging (or receiving power from) a rechargeable power source in the mobile device, etc.). In some embodiments where the receiving multi-loop coil **140** (or some other multi-loop coil in the mobile device) is used for transmitting the short-range RF signals to the hands-free earpiece, the receiving multi-loop coil **140** is powered by the rechargeable power source in the mobile device or some other power source in the mobile device in order to transmit the short-range RF signals to the hands-free earpiece.

In some embodiments, the receiving multi-loop coil **140** may additionally or alternatively be used as a transmitting (or receiving) antenna for a near-field communication (NFC) transaction. In some embodiments, the receiving multi-loop coil **140** may perform the functions of both (a) communicating with (either receiving electromagnetic signals from or transmitting electromagnetic signals to) an NFC terminal and (b) receiving an electromagnetic signal from the broadcast multi-loop coil **110;** the receiving multi-loop coil **140** may not be associated, at all, with charging (or receiving power from) a rechargeable power source in the mobile device. In some embodiments, the receiving multi-loop coil **140** may even perform both functions simultaneously; however, additional hardware may be required to suppress disturbances between electromagnetic signals associated with different functions. In such embodiments, there may be provided a second receiving multi-loop coil in the mobile device that performs the function of recharging (or receiving power from) a rechargeable power source in the mobile device. In some embodiments, the receiving multi-loop coil **140** may perform all three functions, i.e., (a) communicating with (either receiving from or transmitting electromagnetic signals to) an NFC terminal, (b) receiving an electromagnetic signal from the broadcast multi-loop coil, and (c) charging (or receiving power from) a rechargeable power source in the mobile device. In some embodiments, the receiving multi-loop coil **140** may even perform all three functions simultaneously; however, additional hardware may be required to suppress disturbances between electromagnetic signals associated with different functions.

In embodiments where the receiving multi-loop coil **140** can be used for the purpose of an NFC transaction, when the receiving multi-loop coil **140** is brought into the near electromagnetic field (e.g., within about twenty centimeters) of an NFC terminal (i.e., an antenna that receives NFC-frequency electromagnetic signals), the receiving multi-loop coil 140 may transmit an electromagnetic signal to the NFC terminal. For instance, the electromagnetic signal may include payment data (e.g., a credit card number) in an embodiment where the mobile device is being used as a mobile wallet. In some embodiments, a transaction flow in the opposite direction may also be possible. Therefore, when the receiving multi-loop coil **140** is brought into the near electromagnetic field of an NFC terminal, the receiving multi-loop coil **140** may receive an electromagnetic signal from the NFC terminal.

Although an antenna designed for near-field communication (either a passive antenna that is powered by an external power source outside the mobile device or an active antenna that is powered by an internal power source within the mobile device) can be used for the purpose of receiving an electromagnetic signal from the broadcast multi-loop coil **110,** the quality of the audio signal produced by the operational amplifier in such an embodiment may be lower than the quality of the audio signal produced in an embodiment where the receiving multi-loop coil **140** is used for the purpose of charging the rechargeable power source in the mobile device. This is because an NFC antenna (i.e., multi-loop coil) is generally designed for receiving and transmitting electromagnetic signals at higher frequencies (e.g., mega hertz such as 13.56MHz) when compared to the electromagnetic signal frequencies (e.g., hundreds of kHz) associated with a multi-loop coil that is used for the purpose of charging the rechargeable power source in the mobile device. Since the NFC antenna is designed to transmit or receive electromagnetic signals at higher frequencies, the NFC multi-loop coil has a smaller diameter and fewer coil turns when compared to a multi-loop coil (e.g., the receiving multi-loop coil **140)** that is used for the purpose of charging the rechargeable power source in the device. Therefore, the signal-to-noise ratio (SNR) associated with an electromagnetic signal received by the receiving multi-loop coil **140** is greater than the SNR associated with an electromagnetic signal received by multi-loop coil purely designed for NFC transactions. A large SNR associated with a received electromagnetic signal leads to a better quality audio signal produced by the operation amplifier **170.**

In some embodiments where the rechargeable power source in the mobile device (e.g., battery **150)** is sufficiently charged, the rechargeable power source may provide power to the receiving multi-loop coil **140** such that the receiving multi-loop coil **140** functions as an active component rather than a passive component. As an active component, the receiving multi-loop coil **140** may transmit electromagnetic signals in order to accomplish one or more functions. For example, the receiving multi-loop coil **140** may actively transmit electromagnetic signals to the transmitting multi-coil loop **110.** As another example, the receiving multi-loop coil **140** may actively transmit electromagnetic signals (that carry data) to an NFC terminal. As another example, the receiving multi-loop coil **140** may provide power to other components of the mobile device (e.g., a camera, an active NFC chip, a mobile device display, etc.).

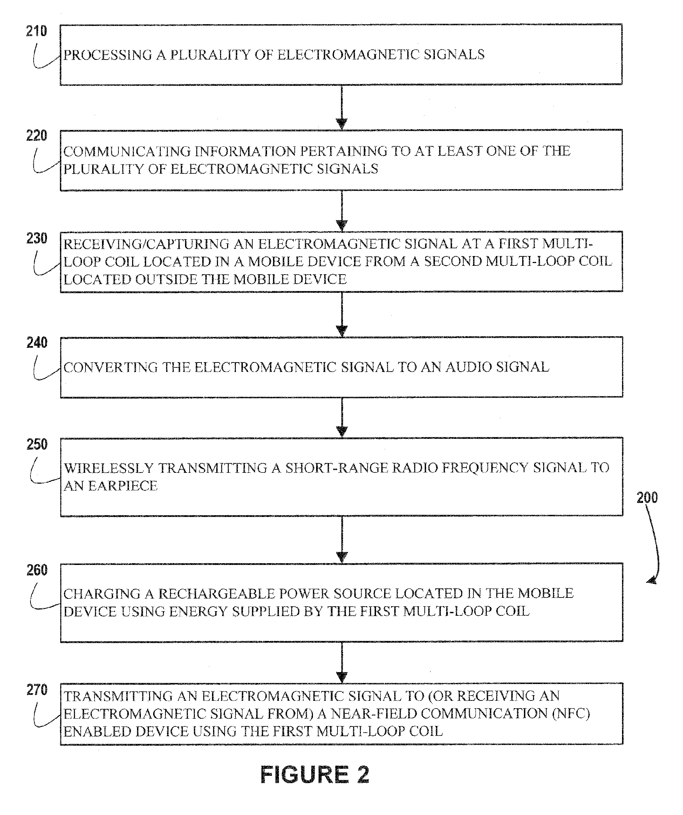

Referring now to Figure 2, a process flow is provided for receiving and processing a plurality of electromagnetic signals at a mobile device. For example, the method **200** presented in Figure 2 includes the following steps: (a) processing a plurality of electromagnetic signals using a processor located in the mobile device **210;** (b) communicating, using an interface in operable communication with the processor, to a mobile device or to a user of the mobile device information pertaining to at least one of the plurality of electromagnetic signals **220;** (c) receiving/capturing an electromagnetic signal at a first multi-loop coil located in a mobile device from a broadcast multi-loop coil that encircles the mobile device **230;** (d) converting the electromagnetic signal to an audio signal using an operational amplifier located in the mobile device **240;** (e) wirelessly transmitting a short-range RF signal to an earpiece (e.g., after converting the electromagnetic signal to a short-range RF signal) **250;** (f) charging a rechargeable power source located in the mobile device using energy supplied by the first multi-loop coil **260;** and (g) transmitting an electromagnetic signal to (or receiving an electromagnetic signal from) a near-field communication (NFC) enabled device or terminal using the first multi-loop coil **270.**

The steps presented in Figure 2 are not necessarily performed in the order presented in Figure 2. The steps of the method presented in Figure 2 may be performed in an order different from that presented in Figure 2. For example, step **250** of Figure 5 may be performed before or simultaneously with step **240.** As another example, steps **260** and **270** of Figure 2 may be performed before or simultaneously with step **230** (or steps **240** and **250).**

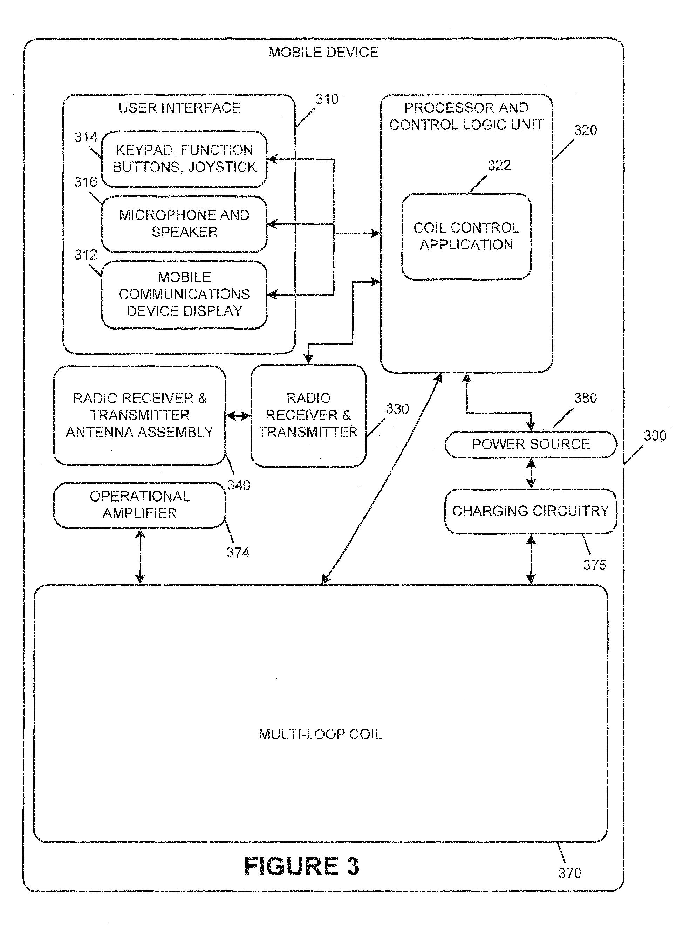

Referring now to Figure 3, a block diagram is presented for a mobile device **300** that houses a multi-loop coil **370.** In the embodiment illustrated in Figure 3, the multi-loop coil **370** is situated in the bottom portion of the mobile device body. In other embodiments, the multi-loop coil **370** may be situated in the top portion of the mobile device body. In some embodiments, the multi-loop coil **370** may encircle the entire body of the mobile device, running along the edges of the mobile device body, either above the surface of the mobile device body or underneath the surface of the mobile device body. In other embodiments, the multi-loop coil **370** is installed in the casing of the mobile device body. The multi-loop coil **370** is the receiving multi-loop coil **140** in Figure 1. Therefore, the multi-loop coil **370** in Figure 3 may also be referred to as the receiving multi-loop coil **370.**

The mobile device **300** may be a cordless telephone, cellular telephone, personal digital assistant (PDA), communicator, computer device or the like and is not unique to any particular communications standard, such as Advanced Mobile Phone Service (AMPS), Digital Advanced Mobile Phone Service (D-AMPS), Global System for Mobile Communications (GSM), Code Division Multiple Access (CDMA) or the like. In some embodiments, the mobile device **300** may not have communication capability and may only include the capability to capture images. The design of mobile device **300** illustrated in Figure 3 is for purposes of explaining the present invention and the present invention is not limited to any particular design.

The mobile device **300** shown in Figure 3 may include an operator or user interface **310** to facilitate controlling operation of the mobile device including initiating and conducting phone calls and other communications. The user interface **310** may include a display **312** to provide visual signals to a subscriber or user as to the status and operation of the mobile device **300.** The display **312** may be a liquid crystal display (LCD) or the like capable of presenting color images. The display **312** may provide information to a user or operator in the form of images, text, numerals, characters, a graphical user interface (GUI) and the like.

The user interface **310** may also include a keypad and function keys or buttons **314** including a pointing device, such as a joystick or the like. The keypad, function buttons and joystick **314** permit the user to communicate commands to the mobile device **300** to dial phone numbers, initiate and terminate calls, capture image using a camera associated with the mobile device, establish other communications, such as access to a mobile television provider, the Internet, send and receive email, text messages and the like. The keypad, function buttons and joystick **314** may also be used to control other operations of the mobile device **300.** The keypad, function buttons and joystick **314** may also be implemented on a touch sensitive display adapted to receive tactile input.

As used herein, the user interface **310** may be an audio interface (e.g., a speaker located in the mobile device or a wireless earpiece in communication with the mobile device) or a visual interface (e.g., a visual display associated with the mobile device). The user interface **310** is in operable communication with the processor and control logic unit **320** and is configured to communicate to the mobile device or to a user of the mobile device information pertaining to one or more of a plurality of electromagnetic signals (e.g., long range radiocommunication signals, short-range RF signals, electromagnetic signals received from a broadcast multi-loop coil, electromagnetic signals associated with NFC transactions, electromagnetic signals associated with charging a rechargeable power source in the mobile device, etc.).

The display **312,** keypad, and function buttons **314** may be coupled to a main processor and control logic unit **320.** The processor and control logic unit **320** may be a microprocessor or the like. The processor and logic unit **320** may include a feature to enable redirecting broadcast signals to an alternate destination. The processor and logic unit **320** may be configured to process a variety of electromagnetic signals (e.g., long range radiocommunication signals, short-range RF signals, electromagnetic signals received from a broadcast multi-loop coil, electromagnetic signals associated with NFC transactions, electromagnetic signals associated with charging a rechargeable power source in the mobile device, etc.). The functions and operations described with respect to the method of Figure 2 (and the embodiments described in Figure 1) may be embodied in a coil control application **322.** In some embodiments, the coil control application **322** may automatically perform the functions of a) causing the receiving multi-loop coil **370** to receive an electromagnetic signal from an external broadcast multi-loop coil, and b) causing the receiving multi-loop coil **370** to charge a power source **380** (e.g., a battery) associated with the mobile device. In some embodiments, the coil control application **322** may allow the receiving multi-loop coil **370** to simultaneously perform the functions of receiving an electromagnetic signal from an external coil (e.g., the broadcast multi-loop coil presented in Figure 1), charging a power source **380** (e.g., battery) associated with the mobile device, transmitting to and/or receiving data from a near-field communication (NFC) enabled device, etc. In some embodiments, the coil control application **322** may allow a user to enter input via the user interface **310** to switch between different functions of the multi-loop coil **370.** In other embodiments, the user may flip a physical switch associated with the mobile device (or a digital switch on the electronic user interface **310)** to switch between the various functions of the receiving multi-loop coil **370** (e.g., charging the power source **380** or receiving power from the power source **380,** using the receiving multi-loop coil **370** as a hearing aid (i.e., receiving an electromagnetic signal from an external coil), using the receiving multi-loop coil **370** as an NFC receiving or transmitting antenna, etc.).

The coil control application **322** may be embodied in hardware, firmware, software (data structures) or combinations thereof. The processor and logic unit **320** may also include other data structures, software programs, computer applications and the like to encode and decode control signals; perform communication procedures and other functions as described herein. In some embodiments, as indicated previously, the functions of the coil control application **322** may be executed by the user via the user interface **310.** In other embodiments, adjustable properties associated with the multi-loop coil **370,** the power source **380,** the charging circuitry **375,** the operational amplifier **374** may also be adjusted or modified by the user via the user interface **310.** For example, the user may adjust the gain of the operational amplifier **374,** the impedance associated with the charging circuitry **375,** the tuning of the charging circuitry **375** or the receiving multi-loop coil **370,** etc.

In some embodiments, the functions of the coil control application **322** may be automatically executed by the processor and the logic unit **320** upon the occurrence of one or more pre-configured or user-defined triggering events. For example, the function of charging the power source **380** using the receiving multi-loop coil 370 may be triggered automatically when the level of power in the power source **380** falls to a pre-determined or user-defined level. As a further example, the function of using the receiving multi-loop coil **370** as an NFC transmitter (e.g., as a payment module) may be enabled when the mobile device is brought in close proximity to an NFC scanner (e.g., an NFC-enabled payment terminal). The close proximity may be detected by the presence of a NFC high-frequency signal (e.g., 13.56 MHz signal) received at the receiving multi-loop coil **370.** Additionally or alternatively, the close proximity may be detected by a distance detector in the mobile device that determines that the NFC scanner is located at a predetermined or user defined distance away (e.g., twenty centimeters) away from the mobile device. As a further example, the function of using the multi-loop coil as a hearing aid may be triggered when electromagnetic signals associated with a pre-defined or pre-configured range of frequencies are received from a broadcast multi-loop coil not located in the mobile device.

The user interface **310** may also include a microphone and a speaker **316.** The microphone **316** may receive audio or acoustic signals from a user or from another acoustic source. The microphone **316** may convert the audio or acoustic signals to electrical signals. The microphone **316** may be connected to the processor and logic unit **320** where the processor and logic unit **320** may convert the electrical signals to baseband communication signals. The processor and control logic unit **320** may be connected to a radio transmitter and receiver **330** that may convert baseband signals from the processor and control logic unit **320** to radio frequency (RF) signals. The mobile radio transmitter and receiver **330** may be connected to an antenna assembly **340** for transmission of the RF signals to a communication medium or system, such as a mobile access network (voice/data) or the like.

The antenna assembly **340** may receive RF signals over the air and transfer the RF signals to mobile radio transmitter and receiver **330.** The mobile radio transmitter and receiver **330** may convert the RF signals to baseband signals. The baseband signals may be applied to the processor and control logic unit **320** which may convert the baseband signals to electrical signals. The processor and control unit **320** may send the electrical signals to the speaker **316** which may convert the electrical signals to audio signals that can be understood by the user.

In accordance with embodiments of the invention, the term "module" with respect to a system (or a device) may refer to a hardware component of the system, a software component of the system, or a component of the system that includes both hardware and software. As used herein, a module may include one or more modules, where each module may reside in separate pieces of hardware or software.

Although many embodiments of the present invention have just been described above, the present invention may be embodied in many different forms and should not be construed as limited to the embodiments set forth herein; rather, these embodiments are provided so that this disclosure will satisfy applicable legal requirements. Also, it will be understood that, where possible, any of the advantages, features, functions, devices, and/or operational aspects of any of the embodiments of the present invention described and/or contemplated herein may be included in any of the other embodiments of the present invention described and/or contemplated herein, and/or vice versa. In addition, where possible, any terms expressed in the singular form herein are meant to also include the plural form and/or vice versa, unless explicitly stated otherwise. Accordingly, the terms "a" and/or "an" shall mean "one or more," even though the phrase "one or more" is also used herein. Like numbers refer to like elements throughout.

As will be appreciated by one of ordinary skill in the art in view of this disclosure, the present invention may include and/or be embodied as an apparatus (including, for example, a system, machine, device, computer program product, and/or the like), as a method (including, for example, a business method, computer-implemented process, and/or the like), or as any combination of the foregoing. Accordingly, embodiments of the present invention may take the form of an entirely business method embodiment, an entirely software embodiment (including firmware, resident software, micro-code, stored procedures in a database, *etc.*), an entirely hardware embodiment, or an embodiment combining business method, software, and hardware aspects that may generally be referred to herein as a "system." Furthermore, embodiments of the present invention may take the form of a computer program product that includes a computer-readable storage medium having one or more computer-executable program code portions stored therein. As used herein, a processor, which may include one or more processors, may be "configured to" perform a certain function in a variety of ways, including, for example, by having one or more general-purpose circuits perform the function by executing one or more computer-executable program code portions embodied in a computer-readable medium, and/or by having one or more application-specific circuits perform the function.

It will be understood that any suitable computer-readable medium may be utilized. The computer-readable medium may include, but is not limited to, a non-transitory computer-readable medium, such as a tangible electronic, magnetic, optical, electromagnetic, infrared, and/or semiconductor system, device, and/or other apparatus. For example, in some embodiments, the non-transitory computer-readable medium includes a tangible medium such as a portable computer diskette, a hard disk, a random access memory (RAM), a read-only memory (ROM), an erasable programmable read-only memory (EPROM or Flash memory), a compact disc read-only memory (CD-ROM), and/or some other tangible optical and/or magnetic storage device. In other embodiments of the present invention, however, the computer-readable medium may be transitory, such as, for example, a propagation signal including computer-executable program code portions embodied therein.

One or more computer-executable program code portions for carrying out operations of the present invention may include object-oriented, scripted, and/or unscripted programming languages, such as, for example, Java, Perl, Smalltalk, C++, SAS, SQL, Python, Objective C, JavaScript, and/or the like. In some embodiments, the one or more computer-executable program code portions for carrying out operations of embodiments of the present invention are written in conventional procedural programming languages, such as the "C" programming languages and/or similar programming languages. The computer program code may alternatively or additionally be written in one or more multi-paradigm programming languages, such as, for example, F#.

Some embodiments of the present invention are described herein with reference to flowchart illustrations and/or block diagrams of apparatus and/or methods. It will be understood that each block included in the flowchart illustrations and/or block diagrams, and/or combinations of blocks included in the flowchart illustrations and/or block diagrams, may be implemented by one or more computer-executable program code portions. These one or more computer-executable program code portions may be provided to a processor of a general purpose computer, special purpose computer, and/or some other programmable data processing apparatus in order to produce a particular machine, such that the one or more computer-executable program code portions, which execute via the processor of the computer and/or other programmable data processing apparatus, create mechanisms for implementing the steps and/or functions represented by the flowchart(s) and/or block diagram block(s).

The one or more computer-executable program code portions may be stored in a transitory and/or non-transitory computer-readable medium (*e.g.,* a memory, *etc.*) that can direct, instruct, and/or cause a computer and/or other programmable data processing apparatus to function in a particular manner, such that the computer-executable program code portions stored in the computer-readable medium produce an article of manufacture including instruction mechanisms which implement the steps and/or functions specified in the flowchart(s) and/or block diagram block(s).

The one or more computer-executable program code portions may also be loaded onto a computer and/or other programmable data processing apparatus to cause a series of operational steps to be performed on the computer and/or other programmable apparatus. In some embodiments, this produces a computer-implemented process such that the one or more computer-executable program code portions which execute on the computer and/or other programmable apparatus provide operational steps to implement the steps specified in the flowchart(s) and/or the functions specified in the block diagram block(s). Alternatively, computer-implemented steps may be combined with, and/or replaced with, operator- and/or human-implemented steps in order to carry out an embodiment of the present invention.

While certain exemplary embodiments have been described and shown in the accompanying drawings, it is to be understood that such embodiments are merely illustrative of and not restrictive on the broad invention, and that this invention not be limited to the specific constructions and arrangements shown and described, since various other changes, combinations, omissions, modifications and substitutions, in addition to those set forth in the above paragraphs, are possible. Those skilled in the art will appreciate that various adaptations, modifications, and combinations of the just described embodiments can be configured without departing from the scope and spirit of the invention. Therefore, it is to be understood that, within the scope of the appended claims, the invention may be practiced other than as specifically described herein.

## Claims

1. A mobile device capable of receiving and processing a plurality of electromagnetic signals, including electromagnetic signals from a broadcast multi-loop coil that encircles a space near where the mobile device is located, the mobile device comprising:
a processor configured to process the plurality of electromagnetic signals;
an interface in operable communication with the processor, wherein the interface is configured to communicate to a user of the mobile device information pertaining to at least one of the plurality of electromagnetic signals;
a first multi-loop coil that captures an electromagnetic signal broadcast from the broadcast multi-loop coil; and
an amplifier that receives the electromagnetic signal from the first multi-loop coil and converts the electromagnetic signal into at least one of an audio signal and a radio frequency (RF) signal that is audibly communicated to the user through the interface.

2. The mobile device of claim 1, further comprising:
a rechargeable power source that supplies power to the mobile device and is located in the mobile device,
wherein the first multi-loop coil is connected to circuitry for charging the rechargeable power source.

3. The mobile device of claim 2, wherein the charging circuitry is tuned such that an impedance at audio frequency as seen from the first multi-loop coil is greater than a threshold impedance.

4. The mobile device of claim 1, wherein the broadcast multi-loop coil receives the electromagnetic signal from an amplifier that converts an audio signal received from an audio source to the electromagnetic signal.

5. The mobile device of claim 1, wherein the first multi-loop coil can be used as a transmitting or receiving antenna for communicating with a near-field communication (NFC) terminal.

6. The mobile device of claim 2, wherein the first multi-loop coil can be used for both charging the rechargeable power source and for communicating with a near-field communication (NFC) terminal.

7. The mobile device of claim 2, wherein the first multi-loop coil can be used simultaneously for capturing the electromagnetic signal broadcast from the broadcast multi-loop coil and for charging the rechargeable power source.

8. The mobile device of claim 1, wherein the interface is a wireless earpiece.

9. A method for receiving and processing a plurality of electromagnetic signals, including electromagnetic signals from a broadcast multi-loop coil that encircles a space near where a mobile device is located, the method comprising:
processing, using a processor located in the mobile device, the plurality of electromagnetic signals;
communicating, using an interface in operable communication with the processor, to a user of the mobile device information pertaining to at least one of the plurality of electromagnetic signals;
capturing, by a first multi-loop coil located in the mobile device, an electromagnetic signal broadcast from the broadcast multi-loop coil; and
receiving, at an amplifier located in the mobile device, the electromagnetic signal from the first multi-loop coil and converting the electromagnetic signal into at least one of an audio signal and a RF signal that is audibly communicated to the user through the interface.

10. The method of claim 9, further comprising:
using the first multi-loop coil, charging a rechargeable power source associated with the mobile device.

11. The method of claim 9, further comprising:
using the first multi-loop coil, transmitting an electromagnetic signal to or receiving an electromagnetic signal from an NFC terminal.

12. The method of claim 9, wherein the interface is a wireless earpiece.

13. A computer program product for receiving and processing a plurality of electromagnetic signals, including electromagnetic signals from a broadcast multi-loop coil that encircles a space in which a mobile device is located, the computer program product comprising:
a non-transitory computer-readable medium comprising a set of codes for:
processing, using a processor located in the mobile device, the plurality of electromagnetic signals;
communicating, using an interface in operable communication with the processor, to a user of the mobile device information pertaining to at least one of the plurality of electromagnetic signals;
capturing, by a first multi-loop coil located in the mobile device, an electromagnetic signal broadcast from the broadcast multi-loop coil; and
receiving, at an amplifier located in the mobile device, the electromagnetic signal from the first multi-loop coil and converting the electromagnetic signal into at least one of an audio signal and a RF signal that is audibly communicated to the user through the interface.

14. The computer program product of claim 13, wherein the non-transitory computer readable medium further comprises a set of codes for:
using the first multi-loop coil, charging a rechargeable power source associated with the mobile device.

15. The computer program product of claim 13, wherein the non-transitory computer readable medium further comprises a set of codes for:
using the first multi-loop coil, transmitting an electromagnetic signal to or receiving an electromagnetic signal from an NFC terminal.
